## Europäisches Patentamt
## European Patent Office
## Office européen des brevets

(19)

(11) Publication number : **0 208 403**
**B1**

(12)

# EUROPEAN PATENT SPECIFICATION

(45) Date of publication of patent specification :
24.01.90

(21) Application number : 86303884.0

(22) Date of filing : 22.05.86

(51) Int. Cl.⁵ : **A 01 N 37/50**, A 01 N 37/48,
A 01 N 37/46, A 01 N 37/36,
A 01 N 37/34, A 01 N 37/02 //
(A01N37/50,
31:02),(A01N37/36,
31:02),(A01N37/48,
31:02),(A01N37/34,
31:02),(A01N37/46,
31:02),(A01N37/02, 31:02)

(54) Water-dilutable disinfectant composition.

(30) Priority : 05.06.85 GB 8514243

(43) Date of publication of application :
14.01.87 Bulletin 87/03

(45) Publication of the grant of the patent :
24.01.90 Bulletin 90/04

(84) Designated contracting states :
AT BE DE FR GB IT NL SE

(56) References cited :
GB--A-- 2 087 724
US--A-- 4 040 977
BRAUWELT, vol. 122, no. 37, September 1982, pages
1608-1615, Nürnberg, DE; M.D. ERNST et al.: "Biers-
chädliche Bakterien, tolerieren oder gezielt eliminie-
ren?"

(73) Proprietor : Diversey GmbH
Postfach 1307
D-6719 Kirchheimbolanden (DE)

(72) Inventor : Rysiok, Thomas
Obere Bahnhofstrasse 13
D-6719 Albisheim (DE)
Inventor : Lichtenberg, Florian
Schillerhein 5
D-6719 Kirchheimbolanden (DE)

(74) Representative : Froud, Clive et al
ELKINGTON AND FIFE Beacon House 113 Kingsway
London WC2B 6PP (GB)

## Description

This invention relates to a water-dilutable disinfectant composition.

Various compounds are known to have a disinfectant activity by themselves or in combination with other compounds. It is a continuing problem to find compositions which meet the particular requirements which are demanded in practice by industry. This invention is directed to the problem of disinfection of hard surfaces in the food and beverage, including brewery, industries and also in hospitals, kitchens and in the home.

Amongst the compounds known as having some antimicrobial (disinfectant) activity may be mentioned bromoacetic acid which is used in combination with sulfuric acid and phosphoric acid. Also aliphatic alcohols have been described in the literature as having antimicrobial activity. From US-A-4,040,977, for example, it is known that condensation products of alcohols or acetamides with formaldehyde exhibit antimicrobial properties. Such condensation products usually exhibit good microbistatic properties, but, for potential disinfectant use on hard surfaces, the kill is too slow. Hence, these products are predominantly used as preservatives for industrial products. The antimicrobial activity of such condensation products is based on the slow release of formaldehyde by hydrolysis. (See also DE-B-2,004,647.) The present Invention does not involve aldehydes or aldehyde-releasing products.

We have found that the activity of a composition which contains as a first component an alpha-substituted aliphatic acid, which is a chloro, iodo, cyano, nitro, amino, imino, thiohydroxy or hydroxy carboxylic acid, and as a second component an aliphatic alcohol with six to twelve carbon atoms, is unexpectedly greater than the activity of either component alone.

Broadly therefore the invention provides disinfectant compositions which include said first and said second component.

The composition in order to be water dilutable will also in practice generally contain a solubilizing agent, as more fully described below.

Of the two components mentioned above the substituted acid is preferably hydroxyacetic (glycolic) acid. The alcohol which makes up the second component, may be an aliphatic alcohol with six to twelve carbon atoms, preferably an alcohol containing from 8 to 12 carbon atoms.

Preferred alcohols are n-decanol and n-octanol, which may be used in admixture.

In a preferred feature of the invention the composition and substituted acetic acid is glycolic acid and the alcohol is n-decanol and/or n-octanol.

The compositions according to the invention should be dilutable with water and therefore solubilising agents are preferably included to solubilise the aliphatic alcohols and to achieve stable formulations. The solubilising agents are not intended to contribute significantly to the microbicidal activity.

In principle any compound which is capable of solubilising the alcohols, can be used. Examples of classes of compounds which may be used include the following :

n-alkyl sulfonates
alkyl aryl sulfonates
aryl sulfonates
fatty alcohol ethoxylates
fatty alcohol ethoxypropoxylates
fatty alcohol sulfates
ethylenediamine ethoxylates
ethylenediamine ethoxypropoxylates
phenyl poly ethoxylates.

These compounds may be used in salt form, e. g. as sodium salts where appropriate.

The compositions according to the invention are active at neutral to acidic conditions. In general no pH-adjustment of the in-use solution is necessary for improving or maintaining of the antimicrobial activity.

However, for particular applications pH-adjustment may be necessary. The addition of inorganic or organic acids means that the pH of the use-solution becomes more independent of both the properties of the water, used for dilution, and of the $CO_2$-partial pressure, which may be quite high in brewery tanks and other facilities where this disinfectant composition may be used. It may also facilitate control of the addition of the composition by measurement of conductivity.

Therefore a certain acid content of the formulation will widen the range of applications.

The preferred acid for this purpose is phosphoric acid, but also sulfuric and nitric acid can be used. Organic acids such as acetic or citric acid can be used also.

The composition according to the invention may also contain auxiliary substances such as dyes, perfumes, surfactants and defoamers.

For each composition according to the invention the substituted acid and the aliphatic alcohol exists an optimized ratio of both components. The content of solubilising agent depends on its structure and the alcohol content.

The composition according to the invention preferably consists of the following on a w/w basis.

a) Chloro iodo cyano nitro amino imino, thiohydroxy and/or hydroxy carboxylic acid ; 0.4-70 % (preferably 0.4-50.0 %)

b) Aliphatic alcohol $C_6$-$C_{12}$ ; 0.1-50 % (preferably 1.0-40.0 %)

c) Solubilising agent for the alcohol ; 0-50 % (preferably 5.0-15 %)

d) Inorganic or organic acids for pH-adjustment of the use-solution : 0-90 % (preferably 5 to 60 %)

e) Auxiliary substances such as dyes, perfumes, surfactants and defoamers, water.

The following examples of concentrates containing 2-hydroxy acetic acid (glycolic acid) in which the percentages are on a weight basis, are given by way of illustration only :

### Concentrates

### Example 1

| | |
|---|---|
| 2-hydroxy acetic acid | 1 % |
| n-decanol | 3 % |
| cumene sulfonate, sodium salt | 12 % |
| phenyl poly ethoxylate sodium salt | 3 % |
| water | 81 % |

### Example 2

| | |
|---|---|
| 2-hydroxy acetic acid | 5 % |
| n-decanol | 2 % |
| phosphoric acid | 40 % |
| n-decyl sulfonate, sodium salt (40 %) | 15 % |
| water | 38 % |

The antimicrobial activity of the active components of the composition by themselves and in combination were tested and the results are given in the following table. In this table there is also shown a mixture of 2-hydroxy-acetic acid, n-decanol and n-decylsulfonate sodium salt which is according to the invention.

(See Tables pages 4-5)

The comparative experiments were carried out on yeast species (Saccharomyces cerevisiae) since these are more difficult to kill than bacteria. The compositions according to the invention also have a very significant activity against bacteria.

The results demonstrate the unexpectedly higher activity obtained by the combination of the two active ingredients.

The formulations given in the Examples will be diluted to provide in-use solutions when required. A suitable dilution will be selected to give an effective concentration. Thus, for example the formulations may be diluted on the basis that a quantity of 0.50 % by weight is diluted with water to 100 % by weight, that is to say a dilution of 200. This is the dilution used for the formulations in the tests reported in the tables.

However, any suitable dilution may be used and solutions of intermediate dilutions may be prepared.

The compositions according to the invention are useful for cold disinfecting and in particular for socalled CIP (cleaning in place) systems where the plant to be disinfected is not dismantled. This is often the case in milk-processing factories and breweries. The temperature of operation is, for such cleaning, of the order of 4 °C.

Microbicidal activity of ingredients used by themselves in admixture and in admixture according to the invention (dilutions done in tap water 300 ppm water hardness, concentrations given in mg/l, activity given in $\log_{10}$-reduction after 5 min. contact time at 4 °C)

Chemicals

| | C1 | C2 | C3 | C4 | C5 | C6 | C7 | C8 | C9 | C10 | C11 |
|---|---|---|---|---|---|---|---|---|---|---|---|
| 2-Hydroxy acetic acid | 250 | 500 | | | | | | | | | |
| n-Hexanol | | | 100 | | | | | | | | |
| n-Octanol | | | | 100 | | | | | | | |
| n-Decanol | | | | | 100 | | | | | | |
| n-Dodecanol | | | | | | 100 | | | | | |
| n-Octylsulfonate sodium salt (40%) | | | | | | | 1000 | | | | |
| n-Decylsulfonate sodium salt (40%) | | | 1000 | 1000 | 1000 | 1000 | | | | | |
| Alkylarylsulfonate sodium salt | | | | | | | 1000 | | | | |
| Cumene sulfonate sodium salt | | | | | | | | | 1000 | | |
| Phenylpolyethoxylate sodium salt | | | | | | | | | 1000 | | |
| Fatty alcohol sulfate sodium salt (50%) | | | | | | | | | 1000 | | |
| Phosphoric acid | | | | | | | | | | | $4 \times 10^5$ |
| Killing capacity in $\log_{10}$ against Saccharomyces cerevisiae | <0,5 | <0,5 | <0,5 | 0,5 | 2 | I | <0,5 | <0,5 | <0,5 | <0,5 | <0,5 |

EP 0 208 403 B1

Microbicidal activity of ingredients used by themselves in admixture and in admixture according to the invention (dilutions done in tap water 300 ppm water hardness, concentrations given in mg/l, activity given in $\log_{10}$-reduction after 5 min. contact time at 4 °C)

| | | | | Examples | |
|---|---|---|---|---|---|
| | | | | 1 | 2 |
| **Chemicals** | | | | | |
| 2-Hydroxy acetic acid | 250 | 250 | 250 | 50 | 250 |
| n-Hexanol | | | | | |
| n-Octanol | | | | | |
| n-Decanol | | | 100 | 150 | 100 |
| n-Dodecanol | | | | | |
| n-Octylsulfonate sodium salt (40%) | | | | | |
| n-Decylsulfonate sodium salt (40%) | 1000 | | 1000 | | 750 |
| alkylarylsulfonate sodium salt | | | | | |
| cumene sulfonate sodium salt | | | | 600 | |
| Phenylpolyethoxylate sodium salt | | | | 150 | |
| fatty alcohol sulfate sodium salt (50%) | | 1000 | | | |
| Phosphoric acid | | | | 375 | 2000 |
| Killing capacity in $\log_{10}$ against Saccharomyces cerevisiae | <0,5 | <0,5 | >5,3 | >5 | >5 |

EP 0 208 403 B1

## Claims

1. A water-dilutable antimicrobial composition characterised by the following ingredients :

a) an alpha-substituted aliphatic acid with 2-6 carbon atoms, where the substituents are selected from chloro, iodo, cyano, nitro, amino, imino, thiohydroxy and hydroxy

b) an aliphatic alcohol containing six to twelve carbon atoms.

2. A composition as claimed in claim 1 in which the substituted aliphatic acid is monohydroxyacetic acid.

3. A composition as claimed in claim 1 or claim 2 in which the alcohol contains from 8 to 12 carbon atoms.

4. A composition as claimed in claim 3 in which the alcohol is n-decanol and/or n-octanol.

5. A composition as claimed in any of claims 1 to 4 in which the composition also includes a solubilising agent for the aliphatic alcohol.

6. A composition as claimed in claim 5 in which the solubilising agent is one or more of the following : fatty alcohol ethoxylates, fatty alcohol ethoxypropoxylates, ethylenediamine ethoxylates, n-alkyl-sulfonates, alkyl aryl sulfonates, aryl sulfonates, fatty alcohol sulfonates and phenyl poly ethoxylates.

7. A composition as claimed in any of claims 1 to 6 which also contains an inorganic or organic acid.

8. A composition as claimed in claim 7 in which the acid is phosphoric acid.

9. A composition as claimed in any of claims 1 to 8 in which the ratio of the substituted aliphatic acid to the alcohol is optimized.

10. A composition as claimed in any of claims 1 to 9 in the form of a concentrate.

11. An in-use solution or a solution of intermediate concentration made by the dilution of a composition as claimed in claim 10 with water.

12. A composition as claimed in any of claims 1 to 11 consisting of the following on a w/w basis :

|  | w/w |
|---|---|
| a) 2-substituted aliphatic acid | 0.4-70 % |
| b) aliphatic alcohol $C_6$-$C_{12}$ | 0.1-50 % |
| c) solubilising agent for (b) | 0-50 % |
| d) inorganic and/or organic acid | 0-90 % |
| e) auxiliary agents, that is dyes, perfumes, surfactants and/or defoamers, water | to 100 % |

13. A method of disinfecting surfaces which comprises applying to said surface as an in-use solution a composition as claimed in any of claims 1 to 12.

14. Surfaces disinfected by the method of claim 13.

## Patentansprüche

1. Wasserverdünnbare antimikrobielle Zusammensetzung, gekennzeichnet durch folgende Bestandteile :

a) eine α-substituierte aliphatische Säure mit 2 bis 6 Kohlenstoffetomen, wobei die Substituenten aus Chlor-, Jod-, Cyan-, Nitro-, Amino-, Imino-, Thiohydroxy- und Hydroxy-Gruppen ausgewählt werden,

b) einem aliphatischen Alkohol mit 6 bis 12 Kohlenstoffatomen.

2. Zusammensetzung nach Anspruch 1, wobei die substituierte aliphatische Säure Monohydroxyessigsäure ist.

3. Zusammensetzung nach Anspruch 1 oder 2, wobei der Alkohol 8 bis 12 Kohlenstoffatome enthält.

4. Zusammensetzung nach Anspruch 3, wobei der Alkohol n-Decanol und/oder n-Oktanol ist.

5. Zusammensetzung nach einem oder mehreren der Ansprüche 1 bis 4, wobei die Zusammensetzung weiterhin ein Lösungshilfsmittel für den aliphatischen Alkohol enthält.

6. Zusammensetzung nach Anspruch 5, wobei das Lösungshilfsmittel eines oder mehrere der folgenden Mittel ist : Fettalkoholethoxylate, Fettalkoholethoxypropoxylate ; Ethylendiaminethoxylate, n-Alkylsulfonate, Alkylarylsulfonate, Arylsulfonate, Fettalkoholsulfonate und Phenylpolyethoxylate.

7. Zusammensetzung nach einem oder mehreren der Ansprüche 1 bis 6, welche weiterhin eine anorganische oder organische Säure enthält.

8. Zusammensetzung nach Anspruch 7, wobei die Säure Phosphorsäure ist.

9. Zusammensetzung nach einem oder mehreren der Ansprüche 1 bis 8, in welcher das Verhältnis der substituierten aliphatischen Säure zum Alkohol optimiert ist.

10. Zusammensetzung nach einem oder mehreren der Ansprüche 1 bis 9 in der Form eines Konzentrates.

11. Eine gebrauchsfertige Lösung oder eine Lösung von intermediärer Konzentration, hergestellt durch die Verdünnung einer Zusammensetzung nach Anspruch 10 mit Wasser.

12. Zusammensetzung nach einem oder mehreren der Ansprüche 1 bis 11, bestehend aus folgendem auf der Basis w/w :

| | w/w |
|---|---|
| a) 2-substituierte aliphatische Säure | 0,4-70 % |
| b) aliphatischer Alkohol $C_6$-$C_{12}$ | 0,1-50 % |
| c) Lösungshilfsmittel für (b) | 0-50 % |
| d) anorganische und/oder organische Säure | 0-90 % |
| e) Hilfsmittel, d. h. Farbstoffe, Duftstoffe, oberflächenaktive Mittel und/oder Entschäumungsmittel, Wasser | auf 100 % |

13. Verfahren zum Desinfizieren von Oberflächen, wobei auf die Oberfläche eine Zusammensetzung in Form einer gebrauchsfertigen Lösung nach einem oder mehreren der Ansprüche 1 bis 12 aufgetragen wird.

14. Oberflächen, welche durch das Verfahren nach Anspruch 13 desinfiziert wurden.

**Revendications**

1. Composition antimicrobienne soluble dans l'eau caractérisée par les composants suivants :
   a) un acide aliphatique α-substitué comprenant de 2 à 6 atomes de carbone, les substituants pouvant être choisis parmi le chlore, l'iode ou les groupements cyano, nitro, amino, imino, thiol ou hydroxyle,
   b) un alcool aliphatique comportant de 6 à 12 atomes de carbone.

2. Composition selon la revendication 1, dans laquelle l'acide aliphatique substitué est l'acide monohydroxyacétique.

3. Composition selon la revendication 1 ou la revendication 2, dans laquelle l'alcool comporte de 8 à 12 atomes de carbone.

4. Composition selon la revendication 3, dans laquelle l'alcool est le n-décanol et/ou le n-octanol.

5. Composition selon l'une quelconque des revendications 1 à 4, dans laquelle la composition comprend aussi un agent solubilisant pour l'alcool aliphatique.

6. Composition selon la revendication 5 dans laquelle l'agent solubilisant correspond à un ou plusieurs des composés suivants : alcools gras éthoxylés, alcool gras éthoxy-propoxylés, éthylènediamines éthoxylées, sulfonates de n-alkyle, sulfonates d'alkyl-aryle, sulfonates d'aryle, sulfonates d'alcool gras et poly-éthoxylats de phényl.

7. Composition selon l'une des revendications 1 à 6, qui contient aussi un acide inorganique ou organique.

8. Composition selon la revendication 7 dans laquelle l'acide est l'acide phosphorique.

9. Composition selon l'une des revendications 1 à 8 dans laquelle la proportion d'acide aliphatique substitué par rapport à l'alcool est optimisée.

10. Composition selon l'une quelconque des revendications 1 à 9 sous forme de concentré.

11. Solution directement utilisable ou solution de concentration intermédiaire obtenue par dilution dans l'eau de la composition selon la revendication 10.

12. Composition selon l'une quelconque des revendications 1 à 11 consistant en, selon un rapport poids/poids :

| | poids/poids |
|---|---|
| a) acide aliphatique 2-substitué | 0,4-50 % |
| b) alcool aliphatique $C_6$-$C_{12}$ | 0,1-50 % |
| c) agent de solubilisation pour b) | 0-50 % |
| d) acide inorganique et/ou organique | 0-90 % |
| e) agents auxiliaires, tels que colorants, parfums, tensio-actifs et/ou anti-mousses | jusqu'à 100 % |

13. Procédé pour désinfecter des surfaces qui consiste à appliquer sur lesdites surfaces, comme solution directement utilisable une composition selon l'une des revendications 1 à 12.

14. Surfaces désinfectées par le procédé selon la revendication 13.